# FASCICULE DE BREVET EUROPEEN

(11) **EP 1 261 498 B1**
(45) Date de publication et mention de la délivrance du brevet: **26.10.2005**
(21) Numéro de dépôt: 01913833.8
(22) Date de dépôt: 23.02.2001
(51) Int. Cl.: B60B 21/10

(54) **JANTE AVEC SIEGES INCLINES VERS L'EXTERIEUR ET ENSEMBLES COMPRENANT UNE TELLE JANTE ET UN APPUI DE SOUTIEN GONFLE**
FELGE MIT NACH AUSSEN GENEIGTEN SCHULTERN UND ANORDNUNG MIT EINER DERARTIGEN FELGE UND AUFGEBLASENER UNTERSTÜTZVORRICHTUNG
RIM WITH SEATS SLOPING OUTWARDS AND ASSEMBLIES COMPRISING SAME AND AN INFLATED BEARING SUPPORT

(30) Priorité: 28.02.2000 FR 0002585
(43) Date de publication de la demande: 04.12.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: MUHLHOFF, Olivier, F-63100 Clermont-Ferrand (FR)
(74) Mandataire: Diernaz, Christian
(86) Numéro de dépôt international: PCT/EP2001/002077
(87) Numéro de publication internationale: WO 2001/064459

(56) Documents cités:
- EP-A- 0 377 338
- EP-A- 0 445 963
- FR-A- 2 149 274
- FR-A- 2 699 121
- FR-A- 2 713 557
- FR-A- 2 756 221
- US-A- 5 232 033

## Description

La présente invention concerne un ensemble formé par une jante et un appui de soutien de bande de roulement gonflable et gonflé à une pression donnée, ledit ensemble formant avec un pneumatique un ensemble roulant pouvant permettre, un roulage à pression diminuée voire nulle dudit pneumatique. Ladite jante, destinée au montage du pneumatique, est plus particulièrement une jante possédant au moins un siège de jante incliné vers l'extérieur.

Le brevet FR 2 699 121 décrit une jante telle que mentionnée ci-dessus. Elle comprend au moins un premier siège de jante tronconique dont la génératrice possède une extrémité axialement extérieure sur un cercle de diamètre inférieur au diamètre du cercle sur lequel se trouve l'extrémité axialement intérieure de ladite génératrice. Le siège tronconique est prolongé axialement à l'extérieur par une saillie ou hump dont le diamètre extérieur est inférieur au diamètre de l'extrémité axialement intérieure de la génératrice de siège de jante. Dans la forme préférentielle de jante, ledit premier siège de jante est prolongé axialement vers l'intérieur par une portée destinée à recevoir un anneau de soutien de bande de roulement, déformable et enfilable sur ladite portée. Limitée axialement par une butée destinée à maintenir l'appui de soutien dans sa position axiale, ladite portée est prolongée par une gorge de montage nécessaire à la mise en place sur la jante des bourrelets du pneumatique. La jante est complétée par l'addition d'un deuxième siège de jante incliné aussi vers l'extérieur et prolongé axialement à l'intérieur par une saillie et axialement vers l'intérieur par un rebord, qui assure la jonction avec la gorge de montage.

Le document FR 2 713 557 décrit une jante selon le préambule de la revendication 1.

L'appui de soutien de bande de roulement généralement utilisé avec la jante telle que décrite précédemment est un appui massif, rigide, en matériau élastomérique ou plastique; il est en outre lourd malgré les nombreux évidements existant entre sa base et son sommet. Or les dispositifs d'appui pour roulement à pression faible ou nulle dans le pneumatique doivent être aussi légers que possible, présenter une capacité de charge aussi grande qu'il est permis sans que la légèreté en soit affectée, permettre au conducteur du véhicule équipé de conserver la maîtrise de son véhicule malgré la perte de pression et plus particulièrement si ladite perte se produit lorsque le pneumatique roule sous contraintes de dérive.

Afin d'atteindre les objectifs mentionnés ci-dessus, l'invention propose une jante du type telle que décrite ci-dessus, mais adaptée pour recevoir un appui de soutien pneumatique sous forme de membrane torique appui qui forme avec ladite jante et le pneumatique un ensemble qui soit facilement montable et démontable. Ainsi, la jante de montage destinée à former un ensemble roulant avec un pneumatique et un appui de soutien de bande de roulement gonflable et gonflé, est telle que décrite dans la revendication 1.

Un siège tronconique pour bourrelet d'appui de soutien est dit incliné vers l'intérieur lorsque, de manière semblable à un siège de jante pour bourrelet de pneumatique, son extrémité axialement intérieure est un cercle de diamètre inférieur au diamètre du cercle de l'extrémité axialement extérieure, qui est le diamètre le plus grand et par convention le diamètre du siège. On entend par siège tronconique pour appui de soutien un siège dont la génératrice fait avec une parallèle à l'axe de rotation un angle compris entre 0° et 20°, les valeurs de 0° et 20° étant incluses, un siège cylindrique étant considéré comme un cas particulier de siège tronconique.

Les deux sièges de part et d'autre du plan équatorial de la jante et destinés à recevoir les bourrelets de pneumatique peuvent avoir des diamètres égaux : la jante concernée est dite symétrique et elle comprend au moins une gorge de montage disposée axialement entre les sièges pour bourrelets d'appui de soutien. L'espace, nécessaire à la mise en place et au fonctionnement des parties mécaniques intérieures à la roue, peut être avantageusement augmentée par la diminution de la profondeur gorge de montage voire la suppression de ladite gorge, ladite diminution ou suppression s'accompagnant de l'emploi d'une jante où les diamètres respectifs des deux sièges pour bourrelets de pneumatique sont inégaux : la jante concernée est dite asymétrique et peut comprendre ou non une gorge de montage située axialement entre les deux sièges pour bourrelets d'appui de soutien. Que les sièges pour bourrelets de pneumatique soient égaux ou inégaux, les sièges pour bourrelets d'appui de soutien peuvent aussi être égaux ou inégaux. Pour la facilité de montage de l'ensemble, il est avantageux que l'inégalité des sièges pour bourrelets de pneumatique soit accompagnée d'une inégalité entre les sièges pour bourrelets d'appui, inégalité de même sens et de même valeur.

Les deux sièges situés du même côté de la jante, sièges respectivement destinés à recevoir un bourrelet de pneumatique et un bourrelet d'appui de soutien pneumatique, peuvent être axialement adjacents et leurs diamètres sont alors égaux. Les dits deux sièges sont préférentiellement réunis par une partie tronconique, dont la génératrice fait, avec une parallèle à l'axe de rotation, un angle ouvert radialement vers l'extérieur et axialement vers l'intérieur compris entre 35° et 55°. Ladite partie tronconique est avantageusement prolongée axialement par une partie cylindrique, les deux parties faisant office d'élément de liaison entre les deux sièges tronconiques.

Dans les variantes préférentielles ci-dessus, le diamètre du siège à bourrelet d'appui est soit égal, soit supérieur au diamètre du siège à bourrelet de pneumatique. Le diamètre du siège à bourrelet d'appui peut être inférieur au diamètre du siège à bourrelet de pneumatique. Dans ce cas, la génératrice de la partie cylindrique est axialement réunie à la génératrice du siège de bourrelet d'appui par un segment de droite soit perpendiculaire à l'axe de rotation de l'ensemble, soit incliné par rapport à la direction parallèle à l'axe de rotation d'un angle pouvant être compris entre 60° et 90°, le siège de bourrelet d'appui étant alors directement relié au fond de gorge de jante, soit au fond de jante ou à une gorge de montage pour appui de soutien. La solution décrite permet une pression de gonflage de l'appui de soutien plus élevée.

Que nous soyons en présence d'une jante symétrique ou d'une jante asymétrique, le montage des bourrelets d'appui de soutien sera grandement facilité si le siège de bourrelet d'appui est prolongé de manière adjacente et axialement vers l'intérieur par une portion tronconique dont la génératrice fait avec une parallèle à l'axe de rotation un angle ouvert radialement vers l'intérieur et axialement vers l'intérieur, compris entre 20° et 50°, ladite partie tronconique étant reliée soit au fond de jante dans le cas d'une jante sans gorge de montage, soit à la paroi verticale d'une gorge, soit au fond de gorge lui-même, dans le cas d'une jante avec gorge.

L'appui de soutien de bande de roulement peut être une membrane torique gonflée à une pression déterminée et pourvue d'une chape recouvrant radialement une armature de renforcement de sommet, ladite chape étant réunie par l'intermédiaire de deux flancs à deux bourrelets, chaque bourrelet étant renforcé par un élément annulaire devant assurer le serrage nécessaire sur le siège de jante pour bourrelet d'appui de soutien. Ladite membrane peut être renforcée en son sommet par une annature de frettage composée au moins d'éléments de renforcement circonférentiels, pratiquement inextensibles ou non. Elle peut être aussi renforcée en son sommet par une armature de renforcement très extensible dont les éléments de renforcement ont la particularité de casser sous une tension donnée supérieure à la somme de la tension générée par la force centrifuge à laquelle elle peut être soumise et de la tension générée par un différentiel de pressions internes entre la cavité pneumatique de la membrane et la cavité pneumatique entre la membrane et l'intérieur du pneumatique, comme décrit par exemple dans le brevet FR 2 756 221 auquel il est fait référence. Dans ce dernier cas, et en cas de perte de pression dans la cavité entre membrane et intérieur du pneumatique, la membrane se détend circonférentiellement pour remplir l'espace interne initialement occupé par le pneumatique. Dans les variantes de sommet mentionnées ci-dessus, l'appui de soutien comporte avantageusement une bande de roulement ou chape en mélange caoutchouteux, dont l'épaisseur peut être variable en fonction des utilisations prévues, et la dite bande pouvant être munie d'éléments de sculpture telles que rainures, nervures ou blocs de caoutchouc. La bande de roulement d'appui est reliée aux bourrelets dudit appui par des flancs, qui sont préférentiellement exclusivement formés d'une (de) couche(s) de mélange(s) de caoutchouc, l'épaisseur du flanc pouvant être radialement variable de manière à ce que la (les) couche(s) s'appliquent parfaitement sur le contour des flancs et bourrelets de pneumatique après perte de pression. Les dits bourrelets d'appui de soutien sont munis d'un anneau circulaire de renforcement inextensible circonférentiellement.

La dite membrane de soutien peut être ouverte ou fermée. Si elle est ouverte, elle peut être mise en pression soit directement (son revêtement intérieur est alors imperméable aux gaz de gonflage usuellement employés) ou mise en pression par l'intermédiaire d'une chambre à air imperméable aux dits gaz. Si elle est fermée, elle se présente sous forme de tube munie d'un moyen de gonflage approprié qui peut être solidaire du moyen de gonflage de la cavité entre membrane et intérieur du pneumatique ou complètement séparé du dit moyen.

Les caractéristiques de l'invention seront mieux comprises à l'aide de la description qui suit et qui se réfère au dessin, illustrant à titre non limitatif des exemples d'exécution, dessin sur lequel,
- la figure 1 représente schématiquement une variante simplifiée de l'ensemble conforme à l'invention,
- la figure 2 représente de la même manière une deuxième variante,
- la figure 3 représente une variante avec une partie cylindrique,
- les figures 4 et 5 représentent deux variantes, avec diamètres différents des deux sièges respectivement pour bourrelet de pneumatique et bourrelet d'appui,
- la figure 6 représente schématiquement une variante de jante asymétrique.

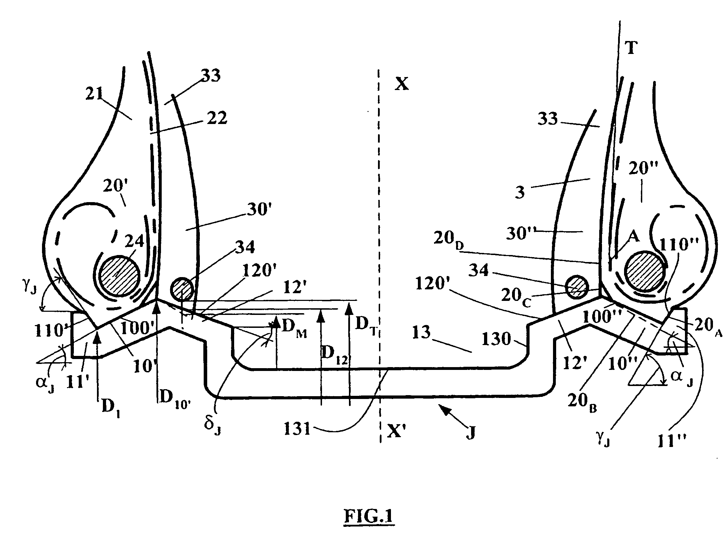

Sur la figure 1, la jante J, conforme à l'invention, comprend un premier siège 10' de jante pour le premier bourrelet 20' de pneumatique, et un deuxième siège 10" pour le deuxième bourrelet 20". Le siège 10' est une surface tronconique dont la génératrice 100' a son extrémité axialement extérieure (par rapport au plan équatorial XX' de la jante) sur cercle de diamètre D₁ inférieur au diamètre D_{10'} du cercle sur lequel se trouve l'extrémité axialement intérieure (le diamètre D_{10'} qui est le plus grand est par convention le diamètre du siège); ledit siège 10' est dit incliné vers l'extérieur et sa génératrice 100' fait avec une parallèle à l'axe de rotation de la jante un angle α_{J}, pouvant être compris entre 0° et 30°, mais égal dans l'exemple décrit à 20°. La génératrice 100' est prolongée axialement vers l'extérieur par la génératrice 110' de la paroi sensiblement tronconique axialement intérieure d'une saillie ou hump 11' formant le bord de la jante J, sensiblement tronconique signifiant que la génératrice 110' de ladite paroi peut être un segment de droite mais aussi un arc de cercle très peu incurvé avec une concavité tournée vers l'intérieur. Ladite génératrice 110' ou la corde qui la sous-tend, fait avec une parallèle à l'axe de rotation un angle γ_{J}, ouvert axialement et radialement vers l'extérieur, égal à 45°, mais pouvant être compris entre 40° et 50°. Le siège 10' est de manière adjacente prolongé axialement vers l'intérieur par un premier siège de jante 12' pour bourrelet 30' d'appui de soutien, ledit siège tronconique, dans le cas décrit, a une génératrice 120' faisant avec une parallèle à l'axe de rotation un angle δ_{J} pouvant être compris entre 0° et 20°, et égal à 10° dans l'exemple étudié. Les génératrices 100", 110", 120" respectivement des deuxièmes siège 10", saillie 11" et siège 12", situées de l'autre côté du plan équatorial, sont symétriques par rapport audit plan aux génératrices 100', 110' et 120'. Une gorge 13, qui sert au montage d'une part du pneumatique et d'autre part de l'appui de soutien et dont la profondeur est calculée en conséquence, complète la jante J, les deux parois latérales 130 de la gorge J assurant la liaison entre les sièges 120' et 120" et le fond de gorge 131.

Comme décrit dans le brevet FR 2 699 121, le pneumatique, destiné à être monté sur la jante J. comprend une bande de roulement réunie au moyen de deux flancs 21 à deux bourrelets 20' et 20". Ledit pneumatique est renforcé par une armature de carcasse radiale 22 ancrée dans chaque bourrelet 20' (20") par retournement autour d'une tringle 24, qui est dans l'exemple montré une tringle de type "tressé". L'armature de carcasse 22 est tangente à la tringle 24 en un point A, par lequel l'on peut faire passer une droite parallèle à l'axe de rotation. En ce point A, la tangente AT au profil méridien de l'armature de carcasse 22 fait avec ladite droite un angle ouvert vers l'extérieur de 85°. Chaque bourrelet 20' (20"), de largeur axiale comparable aux largeurs connues et usuelles de bourrelets, présente un contour extérieur formé principalement d'une pointe de bourrelet dont la face externe 20A fait avec l'axe de rotation un angle γ_{B}, ouvert radialement et axialement vers l'extérieur de 60° ± 10°, cette face 20A étant prolongée axialement à l'intérieur par un siège de bourrelet à base tronconique 20B faisant avec l'axe de rotation un angle α_{B}, ouvert axialement vers l'intérieur et radialement vers l'extérieur, compris entre 10° et 45° et supérieur à l'angle α_{J}, qui est l'angle du siège de jante 10', d'une quantité comprise entre 3° et 15°. Le siège 20B est prolongé axialement à l'intérieur par une génératrice tronconique 20C correspondant au talon du bourrelet, faisant avec l'axe de rotation un angle β_{B} ouvert axialement vers l'intérieur et radialement vers l'extérieur, de 45° ± 10° et étant prolongé à l'intérieur par une paroi 20D sensiblement perpendiculaire à l'axe de rotation.

L'appui de soutien 3 de bande de roulement est une membrane en caoutchouc, imperméable aux gaz de gonflage usuels, comprenant une chape recouvrant radialement une armature de renforcement de sommet, la dite chape étant réunie par l'intermédiaire de deux flancs 33 d'appui à deux bourrelets 30' et 30". En fonction de l'utilisation du pneumatique de l'ensemble roulant, l'armature de renforcement de sommet de la chape d'appui peut être de deux sortes :
* pour un pneumatique destiné à rouler rapidement sur différents types de sols, en particulier un pneumatique pour véhicule hors la route, de tourisme ou camionnette, gonflé à une pression d'utilisation relativement faible (par exemple une pression de 1 bar à 2 bars), l'armature de renforcement de sommet (non montrée) est rendue inextensible circonférentiellement par l'utilisation d'au moins une nappe d'éléments de renforcement quasi-inextensibles circonférentiels, c'est-à-dire faisant avec la direction circonférentielle un angle de 0° ± 2,5°, la membrane étant utilisée avec une pression de gonflage très supérieure à la pression de gonflage du pneumatique, comprise entre 2 et 5 fois la pression d'utilisation, et ladite membrane conservant forme et pression lorsque le pneumatique est soumis à crevaison avec perte partielle ou totale de pression. Les éléments de renforcements sont des câbles en polyamide aromatique, et la(les) nappe(s) a(ont) une(des) largeur(s) supérieure(s) à la largeur de la chape, largeur mesurée sur une droite parallèle à l'axe de rotation et tangente au profil méridien de la chape au point de ladite chape le plus éloigné dudit axe de rotation, et qui est sensiblement égale à la largeur axiale de l'intérieur du pneumatique à sa pression d'utilisation ;
* pour un pneumatique routier de type usuel destiné à rouler à des vitesses usuelles sur route et/ou autoroutes, et gonflé à une pression d'utilisation généralement comprise entre 1,5 et 3,0 bars, l'armature de renforcement est telle que, sous l'effet de la différence de pressions intérieures respectivement de la membrane 3 et du pneumatique (la pression intérieure de la membrane étant supérieure à la pression du pneumatique en roulage normal d'environ 1 bar), elle soit pratiquement inextensible, alors que sous l'effet d'une différence sensiblement augmentée par le fait de perte de pression du pneumatique, elle devient extensible de manière à ce que le développement circonférentiel de sa chape devienne au moins égal au développement circonférentiel de l'intérieur du pneumatique. La dite armature est avantageusement formée d'au moins une nappe d'éléments de renforcement présentant une courbe force-allongement formée de deux portions ayant des pentes différentes: une première portion de l'origine à une certain point d'allongement ε₀ ayant une forte pente, et une deuxième portion allant dudit point d'allongement ε₀ à l'allongement ε_{R} à la rupture ayant une pente très faible. De tels éléments de renforcement peuvent être, comme connu en soi, des câbles ayant une âme particulièrement résistante, autour de laquelle ont été torsadés des filaments ou torons avec des pas de torsion faibles, câbles tels que ceux décrits, par exemple, dans la demande française 98/14695.

Un flanc 33 de l'appui de soutien est préférentiellement constitué d'une simple couche de caoutchouc de faible épaisseur, renforcé par une armature de renforcement d'au plus deux nappes, les câbles formant la ou les dites nappes étant textiles, radiaux ou formant un angle avec la direction circonférentielle, ledit flanc étant terminé par un bourrelet 30' (30") plus épais que le flanc 33, et renforcé par un élément annulaire inextensible 34, élément de renforcement qui peut être une tringle, c'est-à-dire formée d'un fil ou câble enroulé sur plusieurs tours ou de plusieurs fils ou câbles circonférentiels torsadés entre eux, ou d'un enroulement de feuillard. Ledit élément de renforcement 34 a un diamètre intérieur D_{T} qui permette un certain serrage sur le siège de jante 12' (12") pour bourrelet d'appui de soutien, c'est-à-dire une certaine compression radiale de la couche de caoutchouc entre l'élément 34 et la base dudit bourrelet 30' (30"). On entend par serrage s le rapport D_{12'} - D_{M} / 2(D_{T}- D_{M}), les quantités D_{12'}, D_{M}, D_{T} étant les diamètres respectivement du siège de jante 12', de la base de bourrelet d'appui non monté sur jante, de l'élément de renforcement 34, les dits diamètres étant mesurés sur une droite perpendiculaire à l'axe de rotation et passant par le centre de gravité de la section méridienne de l'élément 34. Le serrage s doit permettre l'étanchéité et le maintien en place, quelles que soient les conditions de roulage de l'appui de soutien pour éviter l'apparition de toutes vibrations.

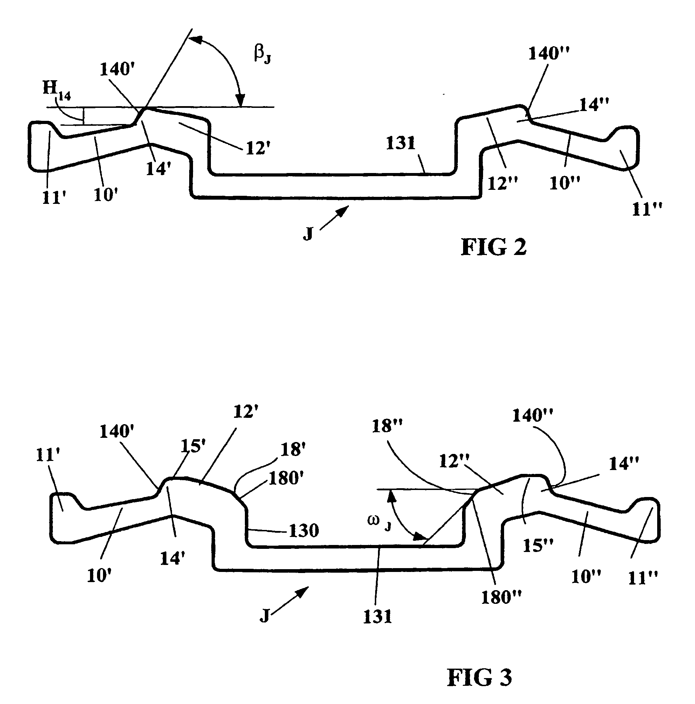

Dans la première variante décrite ci-dessus, les bourrelets 30' et 30" de la membrane de soutien de bande de roulement servent à bloquer les bourrelets du pneumatique monté sur sa jante de service. Les efforts latéraux subis par de tels bourrelets, lorsque l'ensemble roulant est appelé à rouler sous pression nulle dans le pneumatique et sous conditions de forte dérive. étant importants, la variante montrée sur la figure 2 permet une efficacité maximale contre le déjantage du pneumatique et de l'appui de soutien. Ladite variante diffère de la variante illustrée par la figure 1 par l'addition entre le siège tronconique 10' (10") de jante pour bourrelet 20' (20") de pneumatique et le siège de jante 12' (12") pour bourrelet 30' (30") d'appui de soutien 3, d'une portion tronconique 14' (14") dont la génératrice 140' (140") fait avec une parallèle avec l'axe de rotation un angle β_{J} ouvert axialement vers l'intérieur et radialement vers l'extérieur pouvant être compris entre 35° et 55° et égal à 45° dans le cas de la figure 2. La hauteur h₁₄ de cette butée 14', mesurée entre l'extrémité axialement intérieure du siège 10' et l'extrémité axialement extérieure du siège 12' est égale à 3,5 mm, et de toute manière comprise entre 2 et 6 mm.

La variante illustrée par la figure 3 consiste à disposer entre la portion tronconique 14' (14") décrite précédemment et le siège de jante 12' (12") pour bourrelet d'appui, lorsque ce dernier est tronconique, une portion 15' (15") dont la génératrice 150' (150") peut être un segment de droite parallèle à l'axe de rotation ou un arc de cercle centré sur une droite parallèle à l'axe de rotation. Ladite génératrice peut avoir une largeur axiale relativement faible, mais suffisante pour permettre la mise d'une valve de gonflage éventuelle pour la mise en pression du pneumatique. Elle peut aussi avoir une largeur importante d'un côté ou /et de l'autre côté d'ensemble pour permettre l'emploi d'un appui de soutien de bande de roulement dont la largeur axiale maximale est inférieure à la largeur axiale maximale du pneumatique. La figure 3 montre en outre la variante suivant laquelle le siège 12' (12") est axialement vers l'intérieur prolongé par une partie tronconique 18' (18"), dont la génératrice 180' (180") fait avec une parallèle à l'axe de rotation un angle ω_{J} supérieur à l'angle δ_{J}. Dans le cas étudié, ledit angle ω_{J} est égal à 45°, ce qui permet une mise en place du bourrelet pour appui de soutien plus aisée.

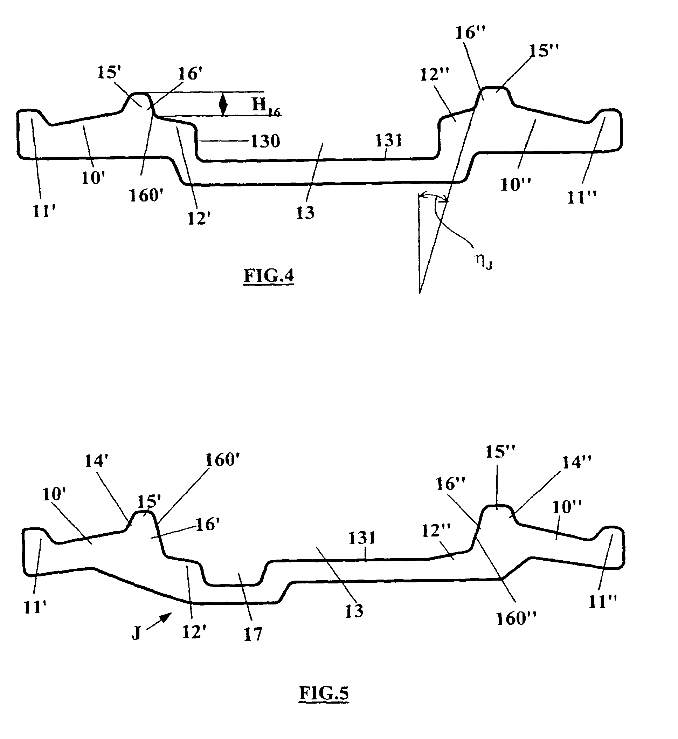

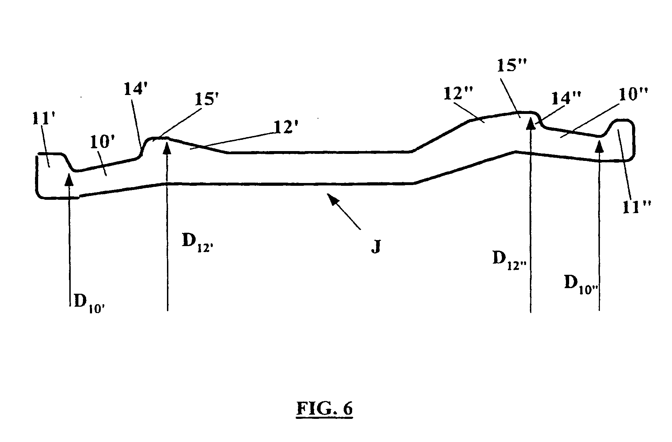

La dite portion cylindrique 15' (15") peut être reliée directement au siège 12' (12") pour bourrelet d'appui (figure 3). Afin de créer un véritable rebord de jante pour le bourrelet d'appui, rebord nécessaire dans le cas de l'utilisation de l'appui de soutien sous très haute pression et ainsi d'éviter le déplacement axial vers l'extérieur du bourrelet de pneumatique lorsqu'on procède au montage, la portion cylindrique 15' (15") est reliée au siège 12'(12") par une portion 16' (16") dont la génératrice 160' (160") fait avec la trace d'un plan parallèle au plan équatorial un angle η_{J} ouvert radialement et axialement vers l'extérieur compris entre 0° et 20°, la valeur de 0° étant incluse dans l'intervalle. Ladite portion 16' (16") peut avoir une hauteur h₁₆ comprise entre 2 et 15 mm (figure 4), selon la qualité de maintien dudit bourrelet d'appui que l'on désire. Lorsque ladite hauteur est relativement forte, et dans le cas où la portion 16' (16") est les parois de la gorge 13, il est nécessaire de prévoir une seconde gorge de montage 17 pour le montage aisé et correct des bourrelets d'appui (figure 5).

Dans toutes les variantes décrites précédemment, il y a nécessité d'une gorge de montage, au moins pour le montage du bourrelet de pneumatique 20" sur son siège 10", puisque ledit montage requiert la sortie du dit bourrelet hors de la jante avant le positionnement sur le siège. Il est bien connu que la présence de gorges de montage n'est pas une solution idéale pour les constructeurs de matériel roulant sur pneumatiques, car réduisant fortement l'espace disponible à l'intérieur de la jante. La profondeur de la (des) gorge(s) de montage peut, comme connu en soi, rendue moins importante au moyen de l'asymétrie de la jante, par le fait que les diamètres de sièges pour bourrelet de pneumatique, les diamètres de sièges pour bourrelets d'appui de soutien sont inégaux. La figure 6 est l'illustration d'un tel exemple, où l'asymétrie st telle que la jante J ne comporte aucune gorge. Comparativement à la jante montrée sur la figure 3, la jante de la figure 5 comprend des sièges de jante 10' et 10" pour bourrelets de pneumatique ayant des diamètres D_{10'} et D₁₀" différents d'une quantité égale à 0,045D_{10'}, alors que les diamètres D_{12'} et D_{12"} des sièges de jante 12' et 12" pour bourrelets d'appui différent de la même quantité.

L'asymétrie simultanée des sièges de jante pour bourrelets de pneumatique et bourrelets d'appui est la solution permettant le montage de l'ensemble le plus aisé possible, mais on ne sort pas du cadre de l'invention si l'asymétrie ne concerne que les sièges de jante pour bourrelets d'appui.

## Revendications

1. Jante de montage J, destinée à former un ensemble roulant avec un pneumatique et un appui de soutien (3) de bande de roulement gonflable et gonflé, et comprenant de chaque côté du plan équatorial un siège de jante (10', 10") incliné vers l'extérieur et prolongé axialement vers l'extérieur par une saillie ou hump (11', 11"), **caractérisée en ce qu'**elle comprend, axialement vers l'intérieur entre chaque siège de jante (10', 10") pour bourrelet (20', 20") de pneumatique et le plan équatorial XX', au moins un siège tronconique (12', 12") incliné vers l'intérieur et faisant un angle différent de 0° avec une parallèle à l'axe de rotation et destiné à recevoir un bourrelet (30', 30") d'appui de soutien pneumatique (3) de bande de roulement.

2. Jante J selon la revendication 1, **caractérisée en ce que** chaque siège de jante (12', 12") a une génératrice (120', 120") faisant avec une parallèle à l'axe de rotation un angle δ_{J} tel que 0° < δ_{J} ≤ 20°.

3. Jante J selon la revendication 2, **caractérisée en ce que** les diamètres D_{10'} et D_{10"} des sièges (10') et (10") pour bourrelets (20') et (20") de pneumatique sont égaux, au moins une gorge de montage (13) étant disposée entre les sièges (12') et (12") pour bourrelets (30') et (30") d'appui de soutien (3).

4. Jante J selon la revendication 3, **caractérisée en ce que** les deux sièges (10') et (12') (10" et 12") situés du même côté de la jante, sièges respectivement destinés à recevoir un bourrelet de pneumatique (20', 20") et un bourrelet (30', 30") d'appui de soutien (3) pneumatique, sont axialement adjacents, leurs diamètres étant alors égaux.

5. Jante J selon la revendication 3, **caractérisée en ce que** les deux sièges (10') et (12') (10" et 12") sont réunis par une partie tronconique (14', 14"), dont la génératrice (140', 140") fait, avec une parallèle à l'axe de rotation, un angle β_{J} ouvert radialement vers l'extérieur et axialement vers l'intérieur compris entre 35° et 55°.

6. Jante J selon la revendication 5, **caractérisée en ce que** ladite partie tronconique (14', 14") est prolongée axialement par une partie cylindrique (15', 15"), les deux parties faisant office d'élément de liaison entre les deux sièges tronconiques (10') et (12'), (10" et 12").

7. Jante J selon la revendication 5, **caractérisée en ce que** les sièges (12') et (12") pour bourrelets (30') et (30") d'appui de soutien (3) sont axialement prolongés par les parois latérales (130) de la gorge (13) de jante J.

8. Jante J selon la revendication 6, **caractérisée en ce que** le diamètre D_{12'} (D_{12"}) du siège (12', 12") pour bourrelet (30', 30") d'appui (3) est inférieur au diamètre D_{10'} (D_{10"}) du siège (10', 10") pour bourrelet (20', 20") de pneumatique, la partie cylindrique (15', 15") étant axialement réunie au siège (12', 12") de bourrelet (30', 30") d'appui (3) par une partie tronconique (16', 16") dont la génératrice (160', 160") fait avec la trace d'un plan parallèle au plan équatorial un angle η_{J} tel que 0° < η_{J} ≤ 20°.

9. Jante J selon la revendication 8, **caractérisée en ce que** les sièges (12') et (12") pour bourrelets (30', 30") d'appui de soutien (3) sont axialement prolongés par les parois latérales (130) de la gorge (12) de jante J.

10. Jante J selon la revendication 8, **caractérisée en ce que** les sièges (12') et (12") pour bourrelets (30', 30") d'appui de soutien (3) sont directement reliés au fond (131) de la gorge (13) de jante J, le fond (131) de la gorge (13) étant munie d'une deuxième gorge (17) pour le montage des bourrelets (30') et (30") de l'appui de soutien (3).

11. Jante J selon la revendication 2, **caractérisée en ce que** les diamètres D_{10'} et D_{10"} des sièges (10') et (10") pour bourrelets (20') et (20") de pneumatiques sont inégaux.

12. Jante selon la revendication 11, **caractérisée en ce que** la jante J est dépourvue de gorge (13) de montage pour bourrelets (20') et (20") de pneumatique.

13. Jante J selon la revendication 11, **caractérisée en ce que** les diamètres D_{12'} et D_{12"} des sièges (12') et (12") pour bourrelets (30') et (30") d'appui de soutien (3) sont inégaux, la différence entre les diamètres D_{12'} et D_{12"} étant égale à la différence entre les diamètres D_{10'} et D_{10"}.

14. Ensemble roulant comprenant un pneumatique, un appui de soutien (3) de bande de roulement gonflable et gonflé, et une jante J selon l'une des revendications 1 à 13.

15. Ensemble selon la revendication 14, **caractérisé en ce que** l'appui de soutien (3) de bande de roulement est une membrane torique, en caoutchouc imperméable aux gaz de gonflage usuels et gonflée à une pression déterminée, pourvue d'une chape recouvrant radialement une armature de renforcement de sommet, ladite chape étant réunie par l'intermédiaire de deux flancs (33) d'appui à deux bourrelets (30') et (30"), chaque bourrelet (30', 30") étant renforcé par un élément annulaire (34), devant assurer le serrage s nécessaire sur le siège de jante (12', 12") pour bourrelet (30', 30") d'appui de soutien (3).

16. Ensemble selon la revendication 15, **caractérisé en ce que** l'armature de renforcement de sommet de la membrane torique est une armature de frettage composée au moins d'une nappe d'éléments de renforcement circonférentiels, la membrane étant utilisée avec une pression de gonflage, comprise entre 2 et 5 fois la pression de gonflage du pneumatique, comprise entre 1 et 2 bars, et conservant forme et pression lorsque le pneumatique est soumis à crevaison avec perte partielle ou totale de pression.

17. Ensemble selon la revendication 15, **caractérisé en ce que** l'armature de renforcement de sommet de la membrane torique est une armature de frettage dont les éléments de renforcement circonférentiels rompent sous une tension donnée supérieure à la somme de la tension générée par la force centrifuge à laquelle la membrane peut être soumise et de la tension générée par un différentiel de pressions de gonflages de l'ordre de 1 bar entre la cavité interne de ladite membrane et la cavité interne du pneumatique, la membrane, en cas de perte de pression dans la cavité du pneumatique se détendant et s'expansant circonférentiellement pour remplir l'espace interne initialement occupé par le pneumatique.

## Patentansprüche

1. Montagefelge J, die mit einem Luftreifen und einem aufpumpbaren und aufgepumpten Stützkörper (3) des Laufstreifens eine fahrfähige Einheit bilden soll und auf jeder Seite der Äquatorialebene einen Felgensitz (10', 10") aufweist, der nach außen geneigt ist und sich axial nach außen in einem Vorsprung oder Hump (11', 11") fortsetzt, **dadurch gekennzeichnet, dass** sie axial nach innen zwischen jedem Felgensitz (10' 10") für den Wulst (20', 20") des Luftreifens und der Äquatorialebene XX' mindestens einen kegelstumpfförmigen Sitz (12', 12") aufweist, der nach innen geneigt ist und mit einer zur Drehachse parallelen Linie einen von 0° verschiedenen Winkel bildet und einen Wulst (30', 30") des pneumatischen Stützkörpers (3) des Laufstreifens aufnehmen soll.

2. Felge J nach Anspruch 1, **dadurch gekennzeichnet, dass** jeder Felgensitz (12', 12") eine Erzeugende (120', 120") aufweist, die mit einer zur Drehachse parallelen Linie einen Winkel δ_{J} aufweist, der so gewählt ist, dass: 0° < δ_{J} ≤ 20°.

3. Felge J nach Anspruch 2, **dadurch gekennzeichnet, dass** die Durchmesser D_{10'} und D_{10"} der Sitze (10') und (10") für die Wülste (20') und (20") des Luftreifens gleich sind, wobei mindestens eine Montagenut (13) zwischen den Sitzen (12') und (12") für die Wülste (30') und (30") des Stützkörpers (3) vorgesehen ist.

4. Felge J nach Anspruch 3, **dadurch gekennzeichnet, dass** die beiden Sitze (10') und (12') (10" und 12"), die sich auf der gleichen Seite der Felge befinden, d.h. die Sitze, die dazu vorgesehen sind, einen Wulst des Luftreifens (20', 20") bzw. einen Wulst (30', 30") des pneumatischen Stützkörpers (3) aufzunehmen, axial aneinander angrenzen, wobei die Durchmesser dann gleich sind.

5. Felge J nach Anspruch 3, **dadurch gekennzeichnet, dass** die beiden Sitze (10') und (12') (10" und 12") über einen kegelstumpfförmigen Bereich (14', 14") verbunden sind, dessen Erzeugende (140', 140") mit einer zur Drehachse parallelen Linie einen radial nach außen und axial nach innen offenen Winkel β_{J} im Bereich von 35 bis 55° bildet.

6. Felge J nach Anspruch 5, **dadurch gekennzeichnet, dass** sich der kegelstumpfförmige Bereich (14', 14") in axialer Richtung in einem zylindrischen Bereich (15', 15") fortsetzt, wobei die beiden Bereiche das Verbindungselement zwischen den beiden kegelstumpfförmigen Sitzen (10') und (12'), (10" und 12") bilden.

7. Felge J nach Anspruch 5, **dadurch gekennzeichnet, dass** sich die Sitze (12') und (12") für die Wülste (30') und (30") des Stützkörpers (3) in axialer Richtung in den Seitenwänden (130) der Vertiefung (13) der Felge J fortsetzen.

8. Felge J nach Anspruch 6, **dadurch gekennzeichnet, dass** der Durchmesser D_{12'} (D_{12"}) des Sitzes 12', 12" für den Wulst (30', 30") des Stützkörpers (3) kleiner ist als der Durchmesser D_{10'} (D_{10"}) des Sitzes (10', 10") für den Wulst (20', 20") des Luftreifens, wobei der zylindrische Bereich (15', 15") mit dem Sitz (12', 12") des Wulstes (30', 30") des Stützkörpers (3) über einen kegelstumpfförmigen Bereich (16', 16") verbunden ist, dessen Erzeugende (160', 160") mit einer parallel zur Äquatorialebene verlaufenden Ebene den folgenden Winkel η_{J} einschließt: 0° ≤ η_{J} < 20°.

9. Felge J nach Anspruch 8, **dadurch gekennzeichnet, dass** die Sitze (12') und (12") für die Wülste (30', 30") des Stützkörpers (3) in axialer Richtung in die Seitenwände (130) der Nut (13) der Felge J übergehen.

10. Felge J nach Anspruch 8, **dadurch gekennzeichnet, dass** die Sitze (12') und (12") für die Wülste (30', 30") des Stützkörpers (3) direkt mit dem Boden (131) der Vertiefung (13) der Felge J verbunden sind, wobei der Boden (131) der Vertiefung (13) mit einer zweiten Vertiefung (17) für die Montage der Wülste (30') und (30") des Stützkörpers (3) versehen ist.

11. Felge J nach Anspruch 2, **dadurch gekennzeichnet, dass** die Durchmesser D_{10'} und D_{10"} der Sitze (10') und (10") für die Wülste (20') und (20") des Luftreifens nicht gleich sind.

12. Felge J nach Anspruch 11, **dadurch gekennzeichnet, dass** die Felge J mit einer Vertiefung (13) für die Montage der Wülste (20') und (20") des Luftreifens versehen ist.

13. Felge J nach Anspruch 11, **dadurch gekennzeichnet, dass** die Durchmesser D_{12'} und D_{12"} der Sitze (12') und (12") für die Wülste (30') und (30") des Stützkörpers (3) nicht gleich sind, wobei der Unterschied in den Durchmessern D_{12'} und D_{12"} dem Unterschied der Durchmesser D_{10'} und D_{10"} entspricht.

14. Rollfähige Einheit, die einen Luftreifen, einen aufpumpbaren und aufgepumpten Stützkörper (3) des Laufstreifens und eine Felge J nach einem der Ansprüche 1 bis 13 umfasst.

15. Einheit nach Anspruch 14, **dadurch gekennzeichnet, dass** der Stützkörper (3) des Laufstreifens aus einer torischen, auf einen vorgegebenen Druck aufgepumpten Membran aus einem für die üblichen Aufpumpgase undurchlässigen Kautschuk besteht, die mit einer Lauffläche versehen ist, die in radialer Richtung eine Scheitelbewehrung bedeckt, wobei die Lauffläche über zwei Flanken (33) des Stützkörpers mit zwei Wülsten (30') und (30") verbunden ist, wobei jeder Wulst (30', 30") mit einem ringförmigen Element (34) verstärkt ist, das das Anpressen s an den Felgensitz (12', 12") gewährleisten soll, das für den Wulst (30', 30") des Stützkörpers (3) erforderlich ist.

16. Einheit nach Anspruch 15, **dadurch gekennzeichnet, dass** die Scheitelbewehrung der torischen Membran eine Verstärkungsbewehrung ist, die aus mindestens einer Lage von umlaufenden Verstärkungselementen zusammengesetzt ist, wobei die Membran bei einem Fülldruck verwendet wird, der im Bereich des 2- bis 5-fachen des im Bereich von 1 bis 2 bar liegenden Fülldrucks des Luftreifens liegt und Form und Druck bewahrt, wenn der Luftreifen bei einer Reifenpanne seinen Druck ganz oder teilweise verliert.

17. Einheit nach Anspruch 15, **dadurch gekennzeichnet, dass** die Scheitelbewehrung der torischen Membran eine Verstärkungsbewehrung ist, deren umlaufende Verstärkungselemente unter einer gegebenen Belastung reißen, die größer ist als die Summe der Spannung, die durch die Zentrifugalkraft gebildet wird, der die Membran ausgesetzt sein kann, und der Spannung, die durch den Unterschied der Fülldrücke in dem inneren Hohlraum der Membran und dem inneren Hohlraum des Luftreifens in der Größenordnung von 1 bar entsteht, wobei sich die Membran im Falle des Druckverlustes in dem Hohlraum des Luftreifens entspannt und in Umfangsrichtung expandiert, so dass sie den anfänglich von den Luftreifen eingenommenen Innenraum ausfüllt.

## Claims

1. Mounting rim J designed to form a rolling assembly with a tyre and an inflatable and inflated tread bearing support (3), and comprising on each side of the equatorial plane a rim seat (10' 10") inclined towards the outside and extended axially outwards by a projection or hump (11', 11 "), **characterised in that** it comprises, axially towards the inside between each rim seat (10', 10") for the tyre beads (20', 20") and the equatorial plane XX', at least one truncated conical seat (12', 12") inclined inwards and designed to receive a bead (30', 30") of the bearing support (3) of the tyre tread.

2. Rim J according to Claim 1, **characterised in that** each rim seat (12', 12") has a generatrix (120', 120") which makes with a line parallel to the rotation axis an angle δ_{J} such that 0° < δ_{J} ≤ 20°.

3. Rim J according to Claim 2, **characterised in that** the diameters D_{10'} and D_{10"} of the seats (10') and (10") for the tyre beads (20') and (20") are equal, and at least one mounting groove (13) is arranged between the seats (12') and (12") for the beads (30') and (30") of the bearing support (3).

4. Rim J according to Claim 3, **characterised in that** the two seats (10') and (12') (10" and 12") located on the same side of the rim, seats designed respectively to receive a tyre bead (20', 20") and a bead (30', 30") of the pneumatic bearing support (3), are axially adjacent and **in that** case have equal diameters.

5. Rim J according to Claim 3, **characterised in that** the two seats (10') and (12') (10" and 12") are connected by a truncated conical portion (14', 14"), whose generatrix (140', 140"), relative to a line parallel to the rotation axis, makes an angle β_{J} of between 35° and 55° which is open radially towards the outside and axially inwards.

6. Rim J according to Claim 5, **characterised in that** the said truncated conical portion (14', 14") is extended axially by a cylindrical portion (15', 15") and the two portions serve to connect the two truncated conical seats (10') and (12') (10" and 12").

7. Rim J according to Claim 5, **characterised in that** the seats (12') and (12") for the beads (30') and (30") of the bearing support (3) are axially extended by the lateral walls (130) of the groove (13) of the rim J.

8. Rim J according to Claim 6, **characterised in that** the diameter D_{12'} (D_{12"}) of the seats (12', 12") for the beads (30', 30") of the support (3) is smaller than the diameter D_{10'} (D_{10"}) of the seats (10', 10") for the tyre beads (20', 20"), and the cylindrical portion (15', 15") is axially connected to the seat (12', 12") for the bead (30', 30") of the support (3) by a truncated conical portion (16', 16") whose generatrix (160', 160"), relative to the trace of a plane parallel to the equatorial plane, makes an angle η_{J} such that 0° ≤ η_{J} < 20°.

9. Rim J according to Claim 8, **characterised in that** the seats (12') and (12") for the beads (30', 30") of the bearing support (3) are axially extended by the lateral walls (130) of the groove (13) of the rim J.

10. Rim J according to Claim 8, **characterised in that** the seats (12') and (12") for the beads (30', 30") of the bearing support (3) are directly connected to the bottom (131) of the groove (13) of the rim J, and the bottom (131) of the groove (13) is provided with a second groove (17) for mounting the beads (30') and (30") of the bearing support (3).

11. Rim J according to Claim 2, **characterised in that** the diameters D_{10'} and D_{10"} of the seats (10') and (10") for the tyre beads (20') and (20") are unequal.

12. Rim J according to Claim 11, **characterised in that** the rim J has no mounting groove (13) for the tyre beads (20') and (20").

13. Rim J according to Claim 11, **characterised in that** the diameters D_{12'}, and D_{12"} of the seats (12') and (12") for the beads (30') and (30") of the bearing support (3) are unequal, the difference between the diameters D_{12'} and D_{12"} being equal to the difference between the diameters D_{10'} and D_{10"}.

14. Rolling assembly comprising a tyre, an inflatable and inflated tread bearing support, and a rim J according to any of Claims 1 to 13.

15. Assembly according to Claim 14, **characterised in that** the tread bearing support (3) is a toric membrane made of rubber impermeable to the usual inflation gases and inflated to a given pressure, provided with a cap radially covering a crown reinforcement, the said cap being connected via two supporting sidewalls (33) to two beads (30') and (30"), each bead (30', 30") being reinforced by an annular element (34) designed to ensure the necessary tightness s on the rim seats (12', 12") for the beads (30', 30") of the bearing support (3).

16. Assembly according to Claim 15, **characterised in that** the crown reinforcement of the toric membrane is a hoop reinforcement consisting of at least one ply of circumferential reinforcement elements, and the membrane is used with an inflation pressure between 2 and 5 times the tyre inflation pressure of between 1 and 2 bar, and retains its shape and pressure when the tyre is punctured with partial or total loss of pressure.

17. Assembly according to Claim 15, **characterised in that** the crown reinforcement of the toric membrane is a hoop reinforcement whose circumferential reinforcement elements rupture under a given tension higher than the sum of the tension produced by the centrifugal force to which the membrane may be subjected and the tension produced by a difference of inflation pressures of the order of 1 bar between the internal cavity of the said membrane and the internal cavity of the tyre, and in the event that pressure in the tyre cavity is lost, the membrane swells and expands circumferentially to fill the internal space initially occupied by the tyre.
